# EUROPEAN PATENT SPECIFICATION

(11) **EP 0 743 463 B1**
(45) Date of publication and mention of the grant of the patent: **24.11.1999**
(21) Application number: 96302895.6
(22) Date of filing: 25.04.1996
(51) Int. Cl.: F16C 1/22

(54) **Bi-directional locking device for use in an adjustable cable or rod control system**
In zwei Richtungen wirkende Arretiervorrichtung in einer einstellbaren Steueranlage mit Bowdenzug oder Betätigungsstange
Mécanisme de blocage bi-directif pour système de commande ajustable à câble ou à barre

(30) Priority: 28.04.1995 GB 9508682
(43) Date of publication of application: 20.11.1996
(73) Proprietor: ADWEST BOWDEN TSK LIMITED, South Wales SA14 9TF (GB)
(72) Inventor: Robinson, Michael, Loughor, Swansea SA4 6GL (GB); Shaw, Bernard, Llanelli, Carmathenshire (GB)
(74) Representative: Livsey, Gilbert Charlesworth Norris

(56) References cited:
- EP-A- 0 370 685
- WO-A-92/08628
- WO-A-94/18462
- FR-A- 2 306 795
- FR-A- 2 553 479
- GB-A- 1 409 297
- US-A- 4 313 704

## Description

This invention relates to a locking device which is effective for coupling and locking two relatively adjustable components requiring frequent and easily effected relative linear adjustment; and with cable or rod positional control systems incorporating such coupling devices. It is particularly concerned with locking devices for adjustably securing relative to a cage or housing, a selected portion of an elongate load transfer member, forming part for example of a cable, bar or rod control member, in a mechanism such as used in a vehicle brake or clutch assembly.

The invention pertains to a general class of adjustable coupling devices which has been known for many years for employment in control cables and like positional control systems. Such a coupling device is of the kind where an elongate load transfer member, eg a cable, bar or more particularly a rod, passes as a sliding fit through an aperture in a plate which is tiltable between two main orientations. In one such orientation, the plate is disposed generally at right angles to that part of the load transfer element which is slidable in the aperture and the rod is then freely slidable in such aperture. In the other orientation, the plate is tilted or canted so that it is disposed inclined to that part of the rod which is slidable in the aperture, and in this condition the rod becomes engaged by the wall defining the aperture and a clamping or coupling effect is achieved, whereby, in one direction at least, relative movement or adjustment between the parts is prevented.

Such devices have been employed in a wide range of uses and, as stated above, they have been employed as adjustable couplings in cable controls and like positional control systems, eg. Bowden controls for the clutch, gear or brake mechanisms of road vehicles. Examples are GB-A-1 409 297; FR-A-2 553 479; and WO 94/18462. A somewhat similar device which employs a star washer instead of a tiltable plate is known from EP-A-0 370 685. In all these devices the locking or coupling effect is greater in one direction of adjustment than it is in the other. However, all these devices are simple and effective in the performance of their intended functions.

The present invention aims at the provision for such purposes of a bi-directional coupling device which, while remaining simple, cheap and effective, provides a generally equal locking effect in the two opposite directions of adjustment in a cable control or like system.

According to this invention, there is provided a device for bi-directionally coupling an elongate member to a cage or housing and for selectively uncoupling the parts so as to permit relative positional adjustment, which device is characterised in that it comprises in combination: a cage which defines a locus for a said elongate member; a pair of plates located by said cage and each having an aperture for the passage of the elongate member; said plates being movable between, firstly, respective orientations in which they are both substantially normal to a long axis of said locus so that a said elongate member occupying said locus would be free to move axially; and, secondly, orientations in which they are oppositely inclined to said long axis and in which a said elongate member occupying said locus would be gripped in the apertures of the two plates and so be locked relative to the cage or housing.

Preferably, the cage is so shaped, and the plates are so arranged within the cage or housing, that, to that side of the locus of the elongate member at which the plates are most closely spaced when they are in their respective oppositely inclined orientations, the housing provides abutment shoulders limiting bodily movement of the plates in axial directions.

And preferably also, the device includes spring means acting on both plates and urging them either towards or away from their inclined orientations.

According to one preferred aspect of the invention there may be provided a bi-directional locking device for adjustably securing the end of a load transfer member, which comprises the said transfer member and a rockable locking plate which has an aperture or orifice receiving the member as a sliding fit and when rocked, capable of bearing upon the load transfer member to impose a locking action upon it, and the device is characterised by having two juxtaposed lockplates each being rockable in an opposite direction from the other whereby movement of the load transfer member in either direction imposes a locking action from one of the lockplates.

The invention offers the advantage of infinitely variable adjustment, within the confines of the device, of the point at which the plate locks on to the elongate load transfer member.

The elongate load transfer member is usually most conveniently an elongate rod but in some mechanisms it may alternatively be a cable or a bar, or some other such elongate member employed in a system requiring length adjustment; and to avoid repetition it will be referred to mainly hereafter as a rod.

In common with the devices previously known, according to the angle of inclination of each lockplate to the rod, the rod either passes freely through the orifice in that plate, or it is engaged by one or more edges of the orifice. In general the orifice in each lockplate will have walls at right angles to the plate surface. With this configuration the rod passes freely at right angles through the plate but when the plate is rocked so as to become inclined, the edges of the orifice contact the rod and impose a locking action upon it. As the angle of inclination of the plate to the rod increases so does the force applied to the member by the edges of the orifice.

In the dual plate assembly now proposed, when axial loads are applied to the rod in one direction, one plate locks the rod against further movement in that direction by virtue of frictional forces generated by the axial load. If the direction of the axial load is reversed the other plate provides the locking forces. The locking load is proportional to the axial force applied, leading to high locking forces. This is a particular advantage of the device according to the invention.

The locking load can nevertheless be easily released when required. This is achieved by applying an external force to the locking plates, either directly by hand or via an external or in-built tool. One convenient form of in-built release tool is a pair of sliding plungers acting upon the respective plates. Once the rod has been released it can be freely positioned to be re-engaged at any point along its working length.

In most instances the most convenient configuration is for the elongate rod to be a member of circular cross-section used in combination with plates having circular holes or orifices with a diameter slightly larger than the rod so that a sliding fit is obtained. Other shapes can be adopted if required, for example square, rectangular, elliptical or irregular, always provided that a co-operating contact can be made between the rod and the boundary walls defining the holes in the two plates.

Preferably each of the lockplates is resiliently biased, with the bias of one being in a direction opposite to that of the other so that the plates are urged to rock in opposite directions.

The resilient bias can be provided by one or more springs, typically helical coil springs. Preferably the lockplates are resiliently biased away from each other by common spring devices. In this configuration it is possible to employ a single spring between the lockplates which has the further advantage of constantly applying a locking action upon the rod in both directions, unless the bias is overridden, for example by manual action, to effect adjustment of the position of the rod relative to the lockplates. This configuration has another advantage in that following external release of the lockplates and adjustment of the position of the rod, the locking action is immediately and automatically reapplied when the external unlocking force is removed.

In one other option, the lockplates can be biased towards each other, in which case an additional means, for example an adjustable wedge, may be needed to move the plates into their locking position.

In a further option the plates are disposed so as to be biased by the action of gravity, thereby avoiding the need for a resilient component to effect the bias.

Conveniently the member and lockplates are mounted in a common housing. The housing preferably includes an inner chamber with abutting edges about which the plates can pivot. In one advantageous configuration the member passes through a bore and inner chamber of the housing and also within the housing through the orifices in the lockplates and through the resilient means.

The member can optionally have an irregular or roughened surface to reduce any risk of slipping of the locked orifice.

Examples of devices according to the invention are further illustrated with reference to the accompanying figures, in which:
Figure 1 is a side view of one version of the device, partly in section, showing the device in a locked position;
Figure 2 is a side view of the device illustrated in Figure 1, but showing the device in a free position.
Figure 3 is an underside view of the Figure 1 device, again with the device in a locked position;
Figure 4 is an underside view of the Figure 1 device, with the device in a free position;
Figure 5 is a side view, partly in section, of a second version of the device, showing the device in a locked position.
Figure 6 is a side view, partly in section, of a third version of the device, showing the device in a locked position.

In each figure any components having substantially the same configuration as equivalent components in other figures are given the same reference numerals. The invention is not limited to the particular configurations shown in the said Figures.

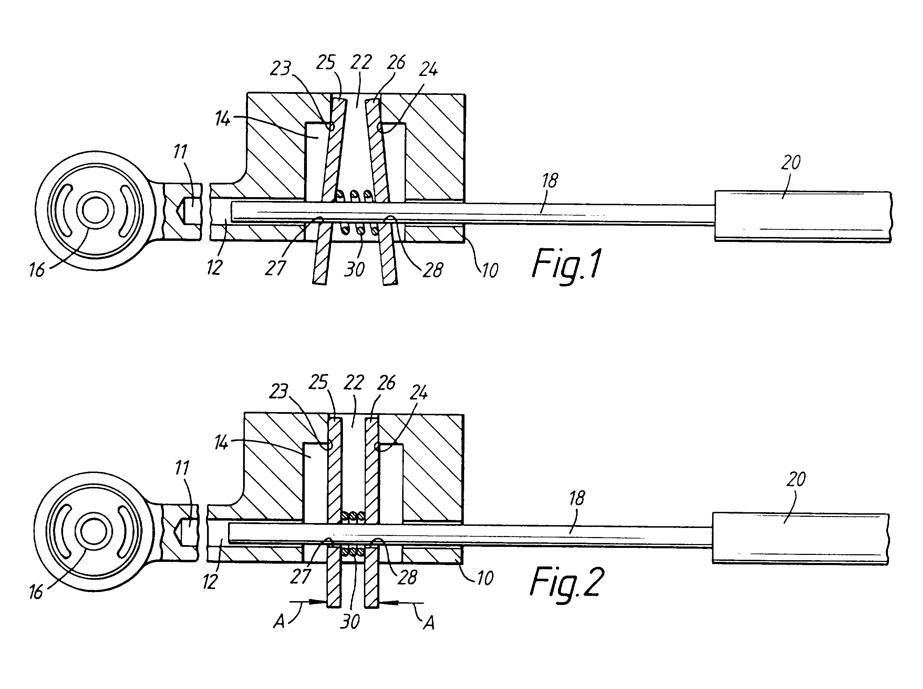

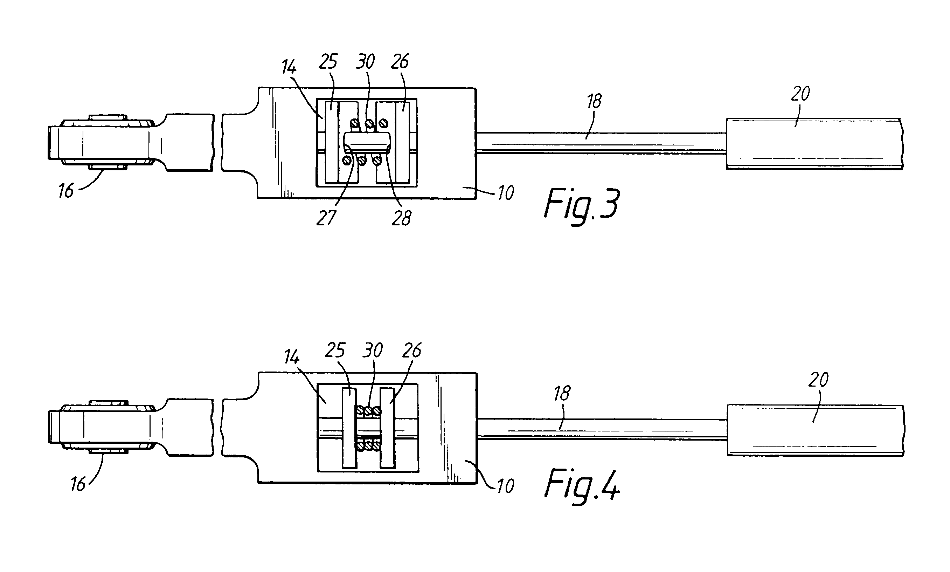

The device of Figures 1 to 4 comprises a body housing or cage 10 with an inner bore or passage 12, an inner chamber 14 and an attachment eye 16. The bore or passage 12 has a blind end adjacent to the eye 16 and at the end remote from the eye 16 is open so as to receive an elongate rod 18.

The rod 18 will form part of a control system the length of which needs to be adjusted. For example the rod 18 may be attached by means of a guide sleeve 20 which in turn is attached to the end of a flexible load transmitting cable (not shown). Alternatively, the rod 18 may be attached directly to a cable (not shown) which is movable within the sleeve 20.

In use, the eye 16 is attached to a control lever or other mechanism (not shown). Adjustment in the system depicted consists in alteration of the distance between the eye 16 and the adjacent end of the sleeve 20, achieved by moving the rod into or out of the cage or housing 10 along the bore 12 thereof. Thus the cage with its bore or passage 12 defines a locus along which the rod 18 can be adjusted in or out in two directions, for example to vary the effective length of a load transmitting control cable.

In the embodiment illustrated by way of example, the inner chamber 14 extends through the housing 10 and includes a narrow neck portion 22, which presents to the main part of the chamber 14 two throat edges 23 and 24.

According to one essential feature of the invention two lockplates 25 and 26 are provided, each having an orifice (respectively 27 and 28) which receives the rod 18 as a sliding fit when the plates are disposed in the orientation which is at right angles to the rod. The shape of the orifices will correspond with the cross sectional shape of the rod and the passage 12 will be correspondingly shaped. Normally the cross section will be round, but a rectagular cross section may equally well be employed. Where the rod 18 is round, the orifices 27,28 will be circular and slightly larger than the diameter of the rod 18.

The lock plates 25, 26 extend across the chamber 14 into the neck portion 22. A helical spring 30 encircles the rod 18 between the two lockplates 25, 26, and biases them apart from each other. The rod 18 thus passes through the bore 12, the chamber 14, the orifices 27,28 in the lockplates 25,26 and the spring 30. The rod 18 is preferably initially positioned to leave an adjustment space 11 of any suitable length at the blind end of the bore or passage 12. The lockplates 25,26 are movable against the bias of the spring 30, being pivoted about the edges 23, 24 respectively of the chamber neck 22.

With the components of the device in position as shown in Figure 1, the spring 30 holds the lockplates 25,26 firmly apart. In this position both the lockplates are orientated inclined relative to the rod 18 and the walls of the orifices bear against the surface of the rod such that both plates are in locking engagement with and coupled to the rod 18. Because in this embodiment the lockplates 25, 26 are biased in opposite directions the locking is effective in both directions. Moreover any movement of the rod 18 towards the blind end 11 increases the locking function by increasing the inclination of the lockplate 25 such that the orifice 27 bites more firmly on the rod 18. Similarly any movement of the rod 18 in the opposite direction has a similar effect through the lockplate 26.

If now, the lockplates 25, 26 are rocked so that their lower parts (as seen) are moved towards each other against the action of the spring 30, for example by the application of a force as shown by A-A, in Figure 2, whether by hand possibly with the aid of a suitable tool, the walls defining the orifices 27, 28 will no longer engage the surface of the rod 18 which can accordingly move freely in either direction as a sliding fit in the orifices in the two plates, thereby permitting adjustment of the position of the rod 18 relative to the locus defined by the cage 10 with its passage 12. This will be effective to adjust the length of the control cable attached to the rod 18.

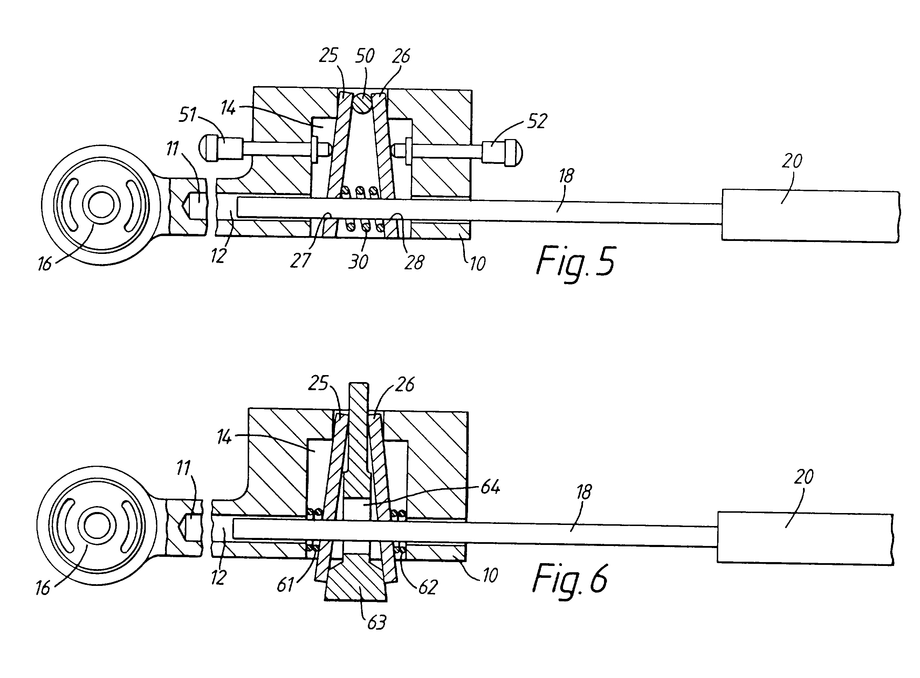

The device shown in Figure 5 is generally similar to that of Figures 1 to 4 but additionally includes a pivot bar 50 disposed across the neck portion 22 and plungers 51,52 passing through the walls of the chamber 14. In this version the lockplates 25,26 do not protrude beyond the housing 10. The plungers 51,52 facilitate movement of the lockplates 25,26 when it is required to free the rod 18 from engagement with them. The pivot bar 50 serves to prevent the plunger action moving the lockplates 25,26 away from their contact with the edges 23, 24 of the neck portion.

The device shown in Figure 6 differs from those of Figures 1 to 5 in having two helical springs 61 and 62 instead of the spring 30. The springs 61,62 again encircle the rod 18 but each is disposed between the chamber wall and the respective lockplates 25,26. A locking wedge 63 is located between the lockplates 25, 26 and protrudes beyond the housing 10 in both directions. The wedge 63 has an elongated slot 64 through which the rod 18 passes and which is sufficiently elongated to permit movement of the wedge between the lockplates 25,26.

In the Figure 6 version the locking action upon the rod 18 is enhanced by pushing the wedge 63 between the lockplates 25,26 against the action of the springs 61,62. When the rod 18 is to be freed the wedge is pushed away (downwards as viewed in the Figure) from engagement with the lockplates 25,26, thereby permitting the spring action to move the lockplates 25,26 into the rod-freeing position. In this version the locking action is largely provided by the wedge acting upon the lockplates and forcing them into contact with the rod. This gives an extremely positive locking effect. As with the other versions any movement of the rod increases the biting action of one of the lockplates so as to increase the locking effect.

## Claims

1. A device for bi-directionally coupling an elongate member to a cage or housing and for selectively uncoupling the parts so as to permit relative positional adjustment, which device is characterised in that it comprises in combination:
a said cage or housing (10) which defines a locus for a said elongate member (18); a pair of plates (25,26) located by said cage and each having an aperture (27, 28) for the passage of the elongate member (18);
said plates being movable selectively between, firstly, respective orientations in which they are both substantially normal to a longitudinal axis of said locus so that a said elongate member (18) occupying said locus would be free to move axially, and secondly, orientations in which they are oppositely inclined to said longitudinal axis and in which a said elongate member (18) occupying said locus would be gripped in the apertures of the two plates and so locked relative to the cage or housing.

2. A device according to claim 1 and wherein the cage (10) is so shaped, and the plates (25, 26) are so arranged within the cage or housing (10), that, to that side of the locus of the elongate member (18) at which the plates are most closely spaced when they are in their respective oppositely inclined orientations, the cage or housing (10) provides abutment shoulders (23, 24) limiting bodily movement of the plates (25, 26) in axial directions.

3. A device according to either of the preceding claims and including spring means (30) acting on both plates and urging them either towards or away from their inclined orientations.

4. A device according to any one of claims 1 to 3 and wherein said elongate member (18) is a rod, bar or cable which forms part of a positional control system.

## Patentansprüche

1. Eine Vorrichtung zur bidirektionalen Koppelung eines länglichen Bauelements mit einem Käfig oder Gehäuse und zur wahlweisen Entkoppelung der Teile zum Ermöglichen der Justierung ihrer relativen Lage, gekennzeichnet durch die Kombination folgender Merkmale:
einen besagten Käfig oder ein Gehäuse (10), das einen Ort für ein besagtes längliches Bauelement (18) definiert; ein Paar von durch den besagten Käfig örtlich festgelegten Platten (25, 26), von denen jede eine Öffnung (27, 28) für den Durchtritt des länglichen Bauelements (18) aufweist;
die besagten Platten sind wahlweise bewegbar zwischen erstens jeweiligen Orientierungen, in denen sie beide im wesentlichen senkrecht zu einer Längsachse des besagten Ortes angeordnet sind, so daß ein besagtes längliches Bauelement (18), welches den besagten Ort besetzt, für eine axiale Bewegung freigegeben ist, und zweitens Orientierungen, in denen sie in entgegengesetzter Richtung zu der besagten Längsachse geneigt angeordnet sind und in denen ein besagtes längliches Bauelement, welches den besagten Ort besetzt, in den Öffnungen der beiden Platten eingeklemmt und somit relativ zum Käfig oder Gehäuse verriegelt ist.

2. Eine Vorrichtung nach Anspruch 1, bei welcher der Käfig (10) so ausgestaltet ist und die Platten (25, 26) so innerhalb des Käfigs oder Gehäuses (10) angeordnet sind, daß der Käfig oder das Gehäuse (10) an der Seite des Ortes des länglichen Bauelements (18) an der die Platten den geringsten Abstand voneinander aufweisen, wenn sie sich in den jeweils gegeneinander geneigten Orientierungen befinden, Anschlagschultern (23, 24) aufweist, welche die Bewegung der Platten (25, 26) als Ganzes in den axialen Richtungen begrenzen.

3. Eine Vorrichtung nach einem der beiden vorhergehenden Ansprüche, welche ein Federmittel (30) umfaßt, das auf beide Platten einwirkt und sie entweder in Richtung auf ihre geneigten Orientierungen oder von diesen wegdrückt.

4. Eine Vorrichtung nach irgendeinem der Ansprüche 1 bis 3, bei welcher das besagte längliche Bauelement (18) eine Stange, ein Stab oder ein Kabel ist, welche jeweils Teil eines Lage-Steuerungssystem sind.

## Revendications

1. Dispositif destiné à accoupler de façon bidirectionnelle un élément allongé à une cage ou un logement, et destiné à désaccoupler de façon sélective les composants de façon à permettre un réglage en position relative, lequel dispositif est caractérisé en ce qu'il comprend en combinaison :
une dite cage ou un dit logement (10) qui définit un lieu pour un dit élément allongé (18) ; une paire de plaques (25, 26) maintenues par ladite cage et comportant chacune une ouverture (27, 28) destinée au passage de l'élément allongé (18) ;
lesdites plaques pouvant être déplacées de façon sélective entre, premièrement, des orientations respectives dans lesquelles elles sont toutes deux pratiquement normales à un axe longitudinal dudit lieu de sorte qu'un dit élément allongé (18) occupant ledit lieu serait libre de se déplacer axialement, et deuxièmement, des orientations dans lesquelles elles sont inclinées de façon opposée par rapport audit axe longitudinal et dans lesquelles un dit élément allongé (18) occupant ledit lieu serait saisi dans les ouvertures des deux plaques et ainsi verrouillé relativement à la cage ou au logement.

2. Dispositif selon la revendication 1 et dans lequel la cage (10) est ainsi formée, et les plaques (25, 26) sont ainsi agencées à l'intérieur de la cage ou du logement (10), que, du côté du lieu de l'élément allongé (18) où les plaques sont le plus étroitement espacées lorsqu'elles se trouvent dans leurs orientations inclinées de façon opposée respectives, la cage ou le logement (10) définit des épaulements de butée (23, 24) limitant le déplacement physique des plaques (25, 26) suivant des directions axiales.

3. Dispositif selon l'une ou l'autre des revendications précédentes et comprenant un moyen de ressort (30) agissant sur les deux plaques et les sollicitant soit vers leurs orientations inclinées soit à l'écart de celles-ci.

4. Dispositif selon l'une quelconque des revendications 1 à 3 et dans lequel ledit élément allongé (18) est une tige, une barre ou un câble qui fait partie d'un système de commande de position.
